# EUROPÄISCHE PATENTSCHRIFT

(11) **EP 0 316 628 B1**
(45) Veröffentlichungstag und Bekanntmachung des Hinweises auf die Patenterteilung: **26.05.1993**
(21) Anmeldenummer: 88117822.2
(22) Anmeldetag: 26.10.1988
(51) Int. Cl.: B61D 47/00, B61B 15/00, B62D 53/08

(54) **Verfahren zur Kombination des Strassen-Individualtransportes und des schienengebundenen Zugtransportes und Einrichtung zur Durchführung des Verfahrens**
Method and system for combining individual road transport and railway transport
Procédé pour combiner le transport routier individuel et le transport ferroviaire et dispositif pour mettre en oeuvre le procédé

(30) Priorität: 20.11.1987 DE 3739277
(43) Veröffentlichungstag der Anmeldung: 24.05.1989
(73) Patentinhaber: Leitz, Ludwig, Dr., D-35578 Wetzlar (DE)
(72) Erfinder: Leitz, Ludwig, Dr., D-35578 Wetzlar (DE)
(74) Vertreter: Riecke, Manfred

(56) Entgegenhaltungen:
- CH-A- 384 378
- DE-A- 1 455 317
- DE-A- 3 425 698

## Beschreibung

Die Erfindung betrifft ein Verfahren zur Kombination des Straßen-Individualtransportes und des schienengebundenen Zugtransportes mit einem schnellen Überwechseln von der einen Transportart zu der anderen.

Der Straßenverkehr hat den Vorteil, als Individualverkehr zur Personen- und Frachtbeförderung zu jeder Zeit jeden beliebigen Ort mit jedem anderen beliebigen Straßenort verbinden zu können. Sein Nachteil aber ist, daß er für jedes Fahrzeug mindestens einen Fahrer benötigt, der insbesondere auf langen Strecken infolge stets wechselnder Verkehrslagen äußerst beansprucht ist. Demgegenüber ist der Schienenverkehr zwar ein starres System, aber für Langstrecken bietet er erhebliche Vorteile. Durch die Gleise ist die Fahrspur genau vorgeschrieben, durch das Blocksystem der Fahrtfreigabe können Auffahrunfälle und Zusammenstöße selbst bei schlechten Sichtbedingungen weitgehend vermieden werden und die Wahrscheinlichkeit von Unfällen kann durch weitere technische Verbesserungen und Redundanz-Vermehrung noch weiter verringert werden.

Die Unfallstatistik ist eindeutig zugunsten des Schienenverkehrs. Entwicklungen zur Entlastung der LKW-Fahrer stecken noch völlig im Embrional-Stadium und man kann nach Überdenken der mannigfachen Verkehrssituationen eindeutig sagen: eine vorübergehende Überbrückung eines Black-out des Fahrzeugführers ist denkbar oder auch eine Entlastung seiner Aufmerksamkeit, aber eine völlig automatische Regelung der Fahrt aller Fahrzeuge des Individualverkehrs wäre so aufwendig und doch so unsicher, daß man den Schienenverkehr erfinden müßte, wenn es ihn nicht schon gäbe. Weitere wichtige Vorteile der Schiene sind die um den Faktor 4 günstigere Energiebilanz, das durch die Elektrolok gegebene ökologisch sauberste Antriebsmittel; es wird für einen langen Güterzug nur ein Zugführerpaar benötigt.

Das traditionelle, noch ausgeübte System des Gütertransports mittels Güterwagen leidet am Rangieren, bei dem mit den damit verbundenen Liegezeiten ein Mehrfaches der Fahrzeit verbraucht wird. Zudem wird wertvolles Gelände für Rangierbahnhöfe verbraucht. Eine Verbesserung hat der Containerverkehr gebracht. Er hat aber keine eigenen Bewegungsmittel und bedarf der Krananlage, der verschiedenen "Handlingseinrichtungen" und des zugehörigen Bedienungspersonals, die in rationeller Weise nur an größeren Umschlagplätzen zur Verfügung stehen. Man ist an Zwischenhalteplätzen nicht in der Lage, innerhalb weniger Minuten mehrere bzw. alle Waggons zu beladen oder zu entladen, um dann wieder Strecke und Beladeanlage dem folgenden Verkehr freizugeben.

Es wurde zwar schon vorgeschlagen, Lastkraftwagen mit einer Art Krananlage zu versehen, die erlaubt, Container in Selbstbedienung durch den LKW-Fahrer vom Lastwagen auf einen Waggon hinüberzuheben und umgekehrt. Hierzu wird aber für den Lastwagen außer den Vorrichtungen, um das Manöver durchzuführen, auch eine Abstützanlage erforderlich, die außer dem Laderahmen auch auf dem Leertransport immer mitgeführt werden muß.

Weiter wirkt bei diesem System beschränkend, daß die meistbenutzten und hierzu geeigneten Container mit 20 Fuß Abmessung einen primitiven Kasten darstellen, der in der Länge beschränkt ist und keinen Spezialtransporten gewachsen ist, wie Lebensmittel-Kühltransport oder z.B. Flüssigkeitstransport. In der Länge gibt es viele Objekte, die größere Container-Abmessungen verlangen und diese sind in Form von 40 Fuß-Containern vorhanden.

Aber diese sind dann nicht mehr mit der vorgeschlagenen mitzuführenden Verladeeinrichtung - wegen ihrer größeren Abmessungen und Gewichte - für das Überwechseln zur Schiene geeignet.

Für größere Container und Spezialcontainer wie Gefriercontainer für argentinisches Fleisch, stehen in großen Häfen Verladeeinrichtungen, Kräne und sogenannte Handling-Einrichtungen mit Personal zur Verfügung.

Dies gilt aber nicht in gleicher Weise für kleinere Stationen, die im Zusammenhang mit wichtigen Europa-Straßen oder Landesstraßen den Langstreckenverkehr in Form von Quellverkehr aufnehmen können oder zum Verteilerverkehr abgeben können.

Die Erfindung geht von der Aufgabenstellung aus, die Vorteile beider Systeme so zu verbinden und zu ergänzen, im Hinblick auf lange Strecken, die in Europa an Bedeutung zunehmen, daß ein wesentlich verbessertes und homogeneres Verkehrssystem entsteht, bei dem Straßen- wie auch Schienensystem, sich gegenseitig entlastend, profitieren.

Der Gedanke ist auch, den Übergang Straße/Schiene als Individualakt technisch zu realisieren.

Ein solches individuelles Überwechseln eines Aufliegers von der Straße auf die Schiene ist bereits in der DE-OS 1 455 317 gezeigt, wobei der Auflieger mittels der Zugmaschine schräg-ruckwärts auf einen Niederflurwagen geschoben wird, bis die Aufliegerräder auf einer drehbaren Platte stehen, die Bestandteil des Niederflurwagens ist. Bei diesem Manöver wird allerdings viel Platz benötigt, und außerdem schränkt die erforderliche genaue Positionierung des Aufliegers auf der Platte die Manövrierfreiheit des Gespanns weitgehend ein.

Der Erfindung liegt die Aufgabe zugrunde, ein solches Übergangsverfahren anzugeben, bei dem auf der Straße bzw. Rampe möglichst wenig Platzbenötigt wird und der eigentliche Übergang von der Rampe auf den Niederflurwagen quasi in einem Parallelversatz des Aufliegers erfolgt.

Diese Aufgabe ist durch ein Verfahren gelöst, das die in Anspruch 1 angegebenen Merkmale aufweist. Die Erfindung geht davon aus, daß als Transporteinheiten des Individualverkehrs Sattelschlepper Verwendung finden, und daß nur deren last- unt transportguttragender Auflieger nach einem an sich bekannten Querrollen schienengebunden transportiert wird, während die Zugmaschine nur das Andockmanöver unterstützt und danach abgekoppelt wird und für andere Trnsportaufgaben im Individualverkehr verwendet wird.

Im Vordergrund steht der Gedanke, einen individuellen Übergang der einzelnen Auflieger von der Straße auf die Schiene zu ermöglichen, und zwar mit Mitteln, die dem Fahrzeugführer und dem Beifahrer der Transporteinheiten selbst zur Verfügung stehen, so daß mehrere Fahrzeuge gleichzeitig bei einem kurzen Aufenthalt eines Zuges das Überwechseln vollziehen können in einer Form von Selbstbedienung
Bei diesem Verfahren bleiben die wesentlichsten und empfindlichsten Einrichtungen in Händen eines einzigen Speditionsunternehmens und ihres Personals, so daß für Führung und Instandhaltung eindeutige Verantwortungen bestehen.

In der DE-OS 34 25 698 ist bereits eine Vorrichtung beschrieben, die ein Querfahrwerk besitzt, so daß ein Querrollen des Straßenfahrzeuges möglich ist. Jedoch wird bei dieser Vorrichtung stets das gesamte Straßenfahrzeug auf die Schiene übernommen, so daß neben der reinen Nutzlast auch noch die Last des Antriebsteiles auf der Schiene transportiert werden muß. Demgegenüber wird bei dem erfundenen Verfahren nur der Auflieger mit der Nutzlast auf die Schiene übernommen, so daß die Zugmaschine für andere Transporte zur Verfügung steht. Außerdem stellen die ausklappbaren Bleche 9 in der vorbeschriebenen Vorrichtung mit ihrer Anordnung oberhalb der Fahrbahn ein Gefahrenmoment dar, das durch die Kippsicherung gemäß der Erfindung beseitigt wird.

Für das an sich bekannte Querfahrwerk am Auflieger ist zwar für den Schienentransport ein zusätzlicher Transportraum erforderlich. Dieser Nachteil wird aber durch die Vorteile, die sich durch sein stetiges Mitführen am Auflieger und in seiner Kombination mit der Zugmaschine bei weitem wettgemacht.
1. Der schnelle und gut abzusichernde Übergang auf das Schienenfahrzeug - nur durch den Lastwagenfahrer gesteuert - wird möglich.
2. Auch der auf Sondertransporte, wie Kühltransport, spezialisierte Sattelschlepper kann an jeder in Zusammenhang mit wichtigen Autobahnkreuzen errichteten Rampenanlage von jedem beliebigen Sattelschlepper heruntergezogen werden.
3. Er kann für einen Lastwagen-Intercityverkehr schnell auf einen anderen Zug aufgeladen werden.
4. Für den Zwischentransport stehen dann die Kraftquellen der Zugmaschine zur Stromlieferung und für die Hydraulik und Pumpsysteme etc. ohne Unterbrechung zur Verfügung.
5. Dies gilt auch für den Übergang von der Schiene auf Autofähren für den kurzen Überseetransport über Meerengen, zu Inseln oder z.B. von Europa nach Nordafrika.
6. Desgleichen von einer Schienenart auf eine andere Schienenart mit anderen Abmessungen, wie auf die russische, spanische und portugiesische Schienenspur.
7. Ergibt die vorgeschlagene Kombination auch Erleichterungen für den Individual-Straßenverkehr. Die vom Auflieger-System erfindungsgemäß mitgeführten Räder zum Querrollen sind in ihrer Manovrierfähigkeit auch für den Verkehr und das Einparken in Innenstädten, engen Altstädten, Fabrikanlagen und Baustellen nützlich.
8. In dieser Straße/Schiene-Kombination kommen die an sich bekannten Vorteile des Sattelschlepper-Systems noch stärker zum Tragen: wie kurze Verlustzeiten beim Beladen, kleinster Raum- und Energieverbrauch beim Leertransport wegen der selbständigen Zugmaschine. Denn in der gedachten Kombination können diese Vorteile zeitlich noch wesentlich rationeller eingesetzt werden, wobei die Zeitplanung samt Fahrplänen und Telekommunikation und Computertechnik gut beherrscht werden können, vorausgesetzt eine gute Kooperation zwischen Spedition und Bahn.
9. Für die Bahn ergibt sich eine bessere Auslastung des rollenden Materials und der Bahnstrecken. Für die Autobahnen, die schon gegenwärtig zum Wochenende und besonders in den Ferienmonaten völlig überlastet sind, ergäbe sich eine Entlastung vom Lastwagen/Langstrecken-Verkehr, der wegen seiner geringen Geschwindigkeit zu Fahrzeugstauungen und zu gefährlichen Überholmanövern führt.
10. Eine weitere Entlastung der Autobahnen und bessere Auslastung der vorhandenen und erfindungsgemäß vorgeschlagenen Anlagen der Bahnen ergibt die ebenfalls vorgeschlagene gleichzeitige Einrichtung und Nutzung derselben für den PKW-Huckepack-Transport.
11. Die konstruktive Ausarbeitung und Einführung des vorgeschlagenen Verfahrens geben eine gute Möglichkeit für die angestrebte bessere gemeinsame Zusammenarbeit innerhalb der EG und zwischen Ost und West.

Es werden nachfolgend drei Ausführungsformen des Verfahrens und der zugehörigen Einrichtungen beschrieben, die drei der möglichen Ausführungsformen als Beispiele erläutern. Es zeigen:
- Fig. 1; 2 u. 3: schematische Darstellungen des Überwechselns von der Straße bzw. der Rampe auf die niveaugleiche Flur eines Niederflurwagens der Schienenbahn,
- Fig. 4: in Aufrißdarstellung einen Querschnitt einer möglichen Kippsicherung für die Niederflurwagen beim rollenden Überwechseln,
- Fig. 5 u. 6: Details zum Blockieren des Aufliegers auf einem Niederflurwagen,
- Fig. 7: in schematischer Darstellung - oben als Aufriß, unten in Draufsicht - die Möglichkeit, den Fahrtrichtungswinkel zwischen Zugmaschine und Auflieger mechanisch zu erfassen für Steuerungs- und Rückmeldungszwecke,
- Fig. 8: einen Vorschlag in Zusammenhang mit der Verwendung der verfahrensmäßigen Einrichtungen und Anlagen auch für den PKW-Huckepack-Verkehr,
- Fig. 9: eine Einrichtung zur Lagesicherung von Straßenfahrzeugen auf dem Niederflurwagen,
- Fig. 10: eine weitere Möglichkeit der Kippsicherung,
- Fig. 11: im Aufriß die Möglichkeit, die Hilfsrollen mit einem Gurt zu versehen.

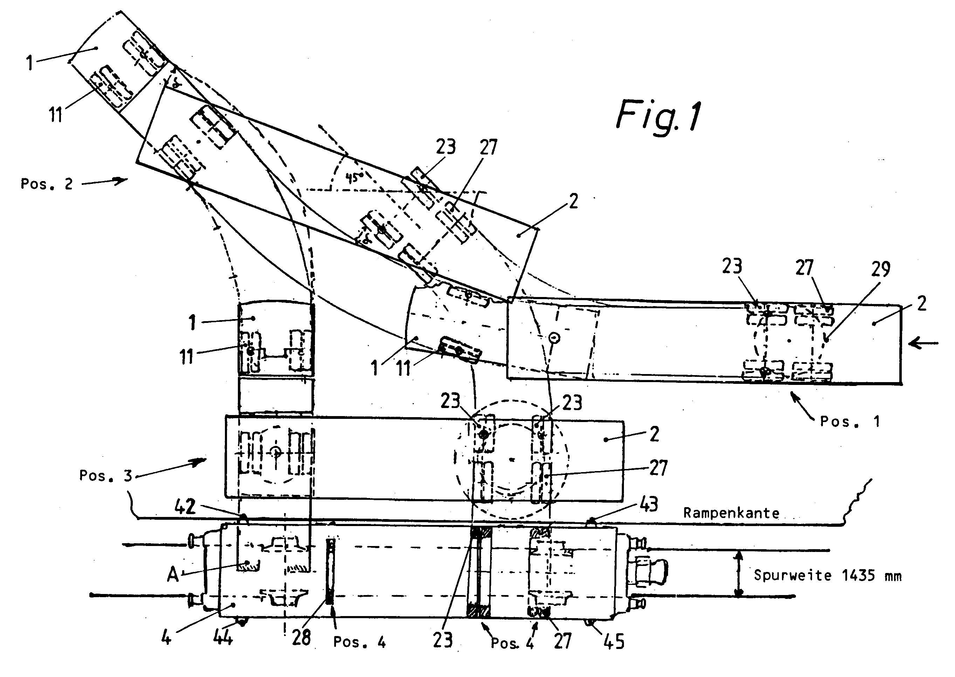

Fig.1 erläutert mit vier markierten Positionen das Andock-Manöver eines Sattelschlepper-Gespanns, bestehend aus Zugmaschine 1 und Auflieger 2, in einer der erfindungsgemäßen Sonderausführungen, bei der die Aufliegerräder 23/27 auf einem Drehkranz 29 gelagert sind. Die beiden vorderen Räder 23 sind einschlagbar, zwecks leichterer Verschwenkbarkeit des Drehkranzes 29 bzw. geringerer Friktion der Reifen. In der Normal-Geradeausfahrt sind der Drehkranz 29 und die Räder 23;27 des Aufliegers 2 wie in Pos.1 parallel zur Fahrtrichtung gestellt.

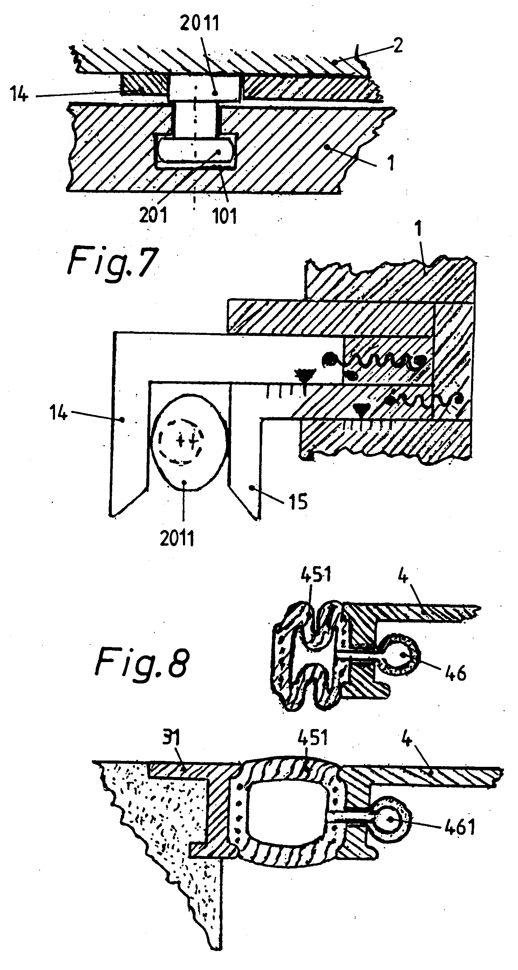

Pos.1 zeigt den Moment des Übergangs von der Geradeausfahrt zum Einschwenken für das Andockmanöver - zunächst zur Pos.2 hin in einer Rechtskurve. Die Vorderräder 11 der Zugmaschine 1 sieht man bereits leicht nach rechts eingeschlagen. Nun muß ein vorgesehener Regelkreis eingeschaltet werden, der mit einem entsprechenden Rückmeldesystem die Winkelstellung des Drehkranzes 29 der Aufliegerräder 23;27 mit der Winkelstellung der Zugmaschine zum Auflieger synchronisiert. Für den nicht näher gezeigten Antrieb des Regelkreises und seiner Rückmeldung können alle bekannten Mittel der Feinwerktechnik und des Maschinenbaus Verwendung finden aus Elementen der Elektrik, Elektronik und/oder der Hydraulik bzw. Pneumatik, die mit Hilfe der üblichen Verbindungskabel zwischen Zugmaschine und Auflieger übertragen werden können. Daß sich für die Rückmeldung für die Winkelstellung zwischen Zugmaschine und Auflieger keine Probleme bieten, wird schematisch in Fig.7 erläutert, anhand eines mechanischen Abgriffs, der dann elektrisch weitergemeldet werden kann.

Am üblichen Kupplungszapfen 201 des Aufliegers 2 wird der oben befindliche Ansatzflansch als elliptische Kurvenscheibe 2011 ausgebildet. Auf der Zugmaschine 1 gelagert, oberhalb der Aufnahmetasche 101 für Zapfen 201 befinden sich Schieber 14 und 15, die wie eine Schieblehre die Kurve 2011 abtasten. Auf diese Weise wird die Winkelbewegung zwischen der Zugmaschine 1 und dem Auflieger 2 in eine Dickenmessung verwandelt, die unabhängig ist von dem Längsspiel des Zapfens 201 in der Tasche 101 gegenüber der Verriegelung. Da aber die Information fehlt, ob der Einschlagwinkel nach rechts oder links erfolgt ist, wird die Kurve 2011 exzentrisch zu Zapfen 201 vorgesehen. Der Meßwert von Schieber 15 zu 1 - durch eine Skala auf 1 gegenüber einem Index auf 15 angedeutet - in Relation zum Meßwert zwischen 14 und 15, ergibt die elektrisch auswertbare Information über das Vorzeichen des Einschlagwinkels.

In der Pos.2 ist mit 45° der halbe Verdrehungswinkel für die 90°-Endposition von Drehkranz 29 und Zugmaschine 1 zu Auflieger 2 erreicht. Der Einschlag der Vorderräder 11 der Zugmaschine ist wieder auf Null zurückgenommen, weil jetzt zur Pos.3 hin in Rückwärtsfahrt der Einschlag der Räder 11 sowie auch der Räder 23 nach der anderen Seite erfolgt. Eines der Räder 27 ist mit einschaltbarem Antrieb versehen, der mindestens dann benötigt wird, wenn die Schubkomponente der Zugmaschine 1 sich zwischen Pos. 2 und 3 dem Wert Null nähert. Um die richtige Position zum Niederflurwagen in einem Anlauf zu erreichen, da der Positionsspielraum sehr knapp ist, sind optische Hilfsmittel, wie z.B. Zebra-Markierungen auf der Rampenflur und entsprechende Katzenaugen bzw. Lampen am Niederflurwagen nützlich. Ob die Pos.3 schon vor der Einfahrt des Zuges eingenommen werden kann, hängt bei dieser Ausführung davon ab, wie eng von der Bahn die notwendigen Toleranzen eingehalten werden können.

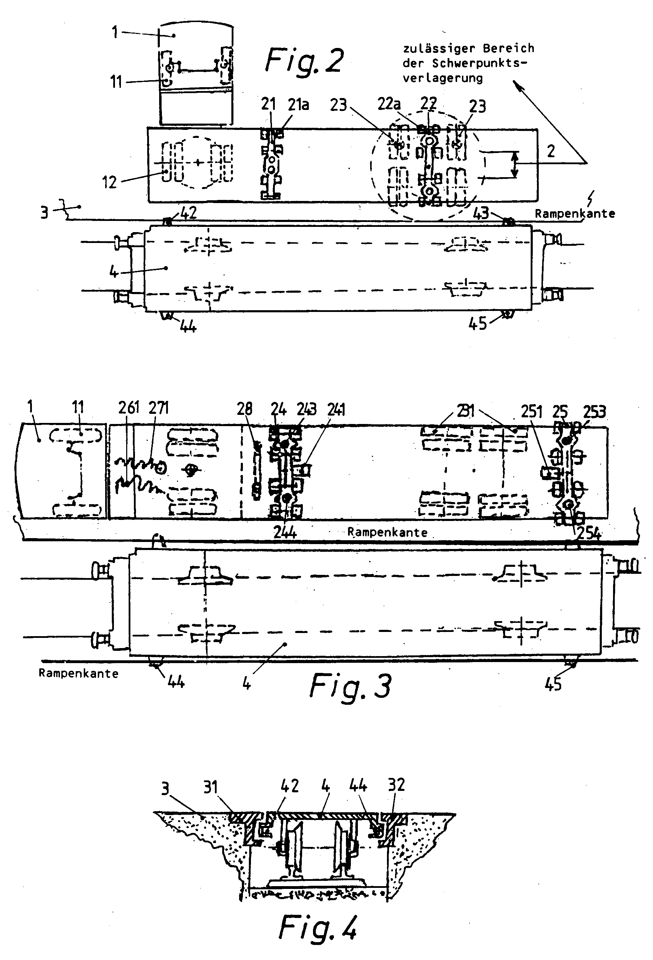

Bei Übergang von Pos.3 zur Pos.4 taucht beim Belastungsübergang der Räder 27 von der Rampenkante 31 zur Flur des Niederflurwangens 4 ein Problem auf, das mit der historisch bedingten geringen Schienenspurweite der meisten europäischen Eisenbahnen zusammenhängt. Bei größeren Gewichten des Aufliegers, insbesondere bei einseitiger Beladung, kann es zum Verkippen des Niederflurwagens kommen. Um dies zu verhindern, bestehen mehrere Möglichkeiten. Eine Möglichkeit wird in Fig.4 beschrieben. Niederflurwagen besitzen für Wartungszwecke Ansätze 42;44, die über die Abmessungen der Flur hinausragen. Versieht man die Rampenkanten mit einbetonierten U-Profil-Schienen, insbesondere mit beidseitiger Rampenanordnung, so läßt sich ein Schutz gegen das Kippen darstellen, der dann besonders günstig ausfällt, wenn man anstelle der Ansätze hintereinander angeordnete und höhenversetzte Rollen anbringen kann, deren Kern elastisch ausgebildet ist, so daß die Kippkräfte aufgenommen werden können. Eine andere Lösung wird später beschrieben. Sind diese Vorkehrungen innerhalb eines internationalen Eisenbahnsystems nicht durchsetzbar oder aus Gründen der Toleranzen und Normungen nicht möglich, so besteht die andere Alternative darin, zusätzliche Stützräder vorzusehen, und zwar am Auflieger, die auch für den Individualverkehr, beim Einparken oder beim Abstellen nützlich sind.

Eine Ausführungsmöglichkeit zeigt Fig.2. An zwei Traversen 21;22, die hydraulisch absenkbar sind, sind je 4 Rollenpaare angebracht, die in der Pos.3 und während des Übergangs so abgesenkt werden, daß ein hoher Anteil der Last auf ihnen ruht. Beim Hinüberrollen auf den Niederflurwagen sind die vorderen Stützrollen bereits in einer Berührungsstellung senkrecht über den Gleisen, bevor die übrigen Räder, insbesondere die folgenden Stützräder, ein Kippmoment ausüben können. Bei dieser Ausführung bleibt im Gegensatz zur Ausführung nach Fig.3 die Entlastung der Räder 23 noch innerhalb des Federungsbereichs, so daß auch noch der vorgesehene Antrieb über die Reifen zum Hinüberrollen gegeben ist.

Die Endstellung der Pos.4 ist erreicht, wenn die Räder 23;27 die auf dem Niederflurwagen 4 markierten Stellungen eingenommen haben und gleichzeitig die Spuren der Antriebsräder der Zugmaschine die mit A markierte Stellung. Die Zugmaschine hat dann ihre Aufgabe erfüllt und kann nach Abkuppeln in Vorwärtsfahrt zurück zur Rampe andere Aufgaben erfüllen.

Bei Vorhandensein von Rampen auf beiden Seiten der Gleise kann das Auffahrtmanöver bei der Vorher beschriebenen Sattelschlepper-Ausführung auch mit der Zugmaschine 1 im Vorwärtsfahrt ausgeführt werden. Hat der Auflieger die Endstellung auf dem Niederflurwagen erreicht, so befinden sich die Vorderräder der Zugmaschine auf der gegenüberliegenden zweiten Rampe. Die Zugmaschine kann dann über diese Rampe abfahren. Vor dem Abkuppeln und der Abfahrt muß aber der Auflieger 2 auf dem Niederflurwagen 4 festgelegt werden.

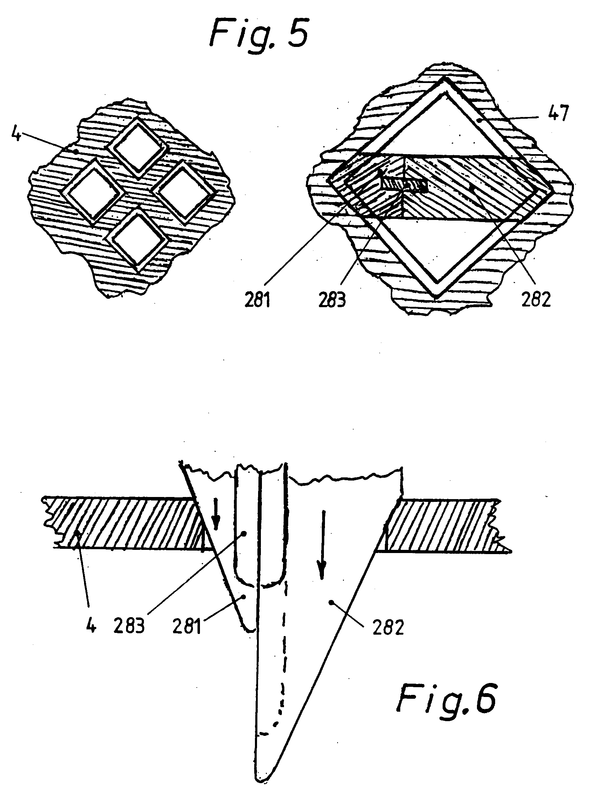

Die übliche hydraulisch absenkbare Stütze 28 ist für diesen Zweck mit elastisch und automatisch - z.B. mittels Pneumo-Hydraulik - einschnappenden Verzapfungen bzw. Verriegelungen versehen, die das Fahrzeug auf dem Niederflurwagen blockieren, um auch diesen Vorgang schnell und personalsparend vornehmen zu können. Fig.5 und 6 erläutern eine Möglichkeit hierzu, und zwar innerhalb eines notwendigen Toleranzbereichs. Eine gleiche Einrichtung wie vorne ist auch hinten vorzusehen. Die Flur des Niederflurwagens sei zumindest an den Stellen, die zum Blockieren dienen können, rostartig mit z.B. in der Draufsicht diagonalförmigen Löchern versehen, entsprechend Fig.5. In dieser Figur ist mit 47 ein einzelnes Loch bezeichnet. 281 und 282 sind keilförmig ausgebildete Riegel, die in der Stütze 28 gelagert und geführt werden. Sie werden beim Erreichen der Position 4 und Einfahren der Stütze 28 in Pfeilrichtung pneumohydraulisch nach unten getrieben. Mit Hilfe des Keilschubs wird in Querrichtung eine Symmetriestellung des Aufliegers 2 zum Niederflurwagen 4 erzwungen, wobei vorausgesetzt ist, daß die Position 4 soweit erreicht ist, daß die Keile in das Loch 47 einfallen können. Dies bedingt ferner, daß für den Querantrieb abtriebsseitig eine Rutschkupplung vorgesehen ist, die durch die Schubkräfte der Blockierkeile überwunden werden kann. Bei dieser Anordnung wird angenommen, daß für die Positionierung des Aufliegers nach vorne und hinten ein etwas größerer Spielraum zulässig ist. 283 ist eine Führungsleiste zur Aufnahme der Querkräfte.

Fig.3 zeigt eine andere Ausführungsform des Erfindungsgedankens. Auch hier Vollzieht sich der Übergang straße/Schiene auf gleichem Niveau und durch Querbewegung des Straßenfahrzeugs zum Schienenzug.
Die Hinterräder 231 und gegebenenfalls weitere Räder des Aufliegers bleiben in üblicher Ausführung ohne Lagerung auf einem Drehkranz.

Von Vorteil ist für diese Ausführung eine bereits übliche pneumohydraulische Veränderbarkeit der Radfederung. Dann wird bei dieser Ausführung der Auflieger allein durch die zusätzlichen Stützrollen 24;25, die mit eigenen Antrieben versehen sind, quer auf den Niederflurwagen 4 hinübergerollt. Der Antrieb kann aus Elektromotoren 241;251 bestehen, die über selbsthemmende Schnecken mindestens je ein oder zwei Räderpaare antreiben. Mit 243; 244; 253 und 254 sind die hydraulischen Zylinder angedeutet, die die Rollen tragenden Traversen anzuheben oder abzusenken gestatten. Alle vier Hydraulik-Zylinder können dann entbehrt werden, wenn sämtliche normalen Räder des Aufliegers und auch die hinteren Räder der Zugmaschine pneumohydraulisch so weit bewegt werden könnten, daß nur die querstehenden Hilfsräder zum Einsatz kommen und auch in dieser Stellung bei der Straßenfahrt nicht stören. Anderenfalls können sich auch beide Bewegungen ergänzen, um mit geringeren Hüben auszukommen.

Diese Ausführung hat den Vorteil, daß die Position 3b unmittelbar vor dem Überwechseln mühelos erreicht werden kann und auch schon vor Einlaufen des Zuges und, daß noch nach Einlaufen des Zuges Feinkorrekturen in der Stellung gegenüber dem von der Spedition gebuchten Niederflurwagen vorgenommen werden können. Erst dann erfolgt das Abkuppeln der Zugmaschine, die bei dieser Ausführung nicht für den Querschub eingesetzt wird, jedoch für die Energiezufuhr; wofür notwendig ist, daß die Energiekabel und Schläuche genügend ausziehfähig sind, um die Auskuppelbewegung der Zugmaschine und die Querbewegung des Aufliegers zuzulassen. Ist die Endposition erreicht und der Auflieger auf dem Niederflurwagen blockiert, so können die Energieverbindungen zur Zugmaschine gelöst werden und nun für den Fall des Strombedarfs, z.B. eines Kühlaufliegers, eine Stromverbindung mit dem Zug geschlossen werden. Entsprechende Vorkehrungen müssen am Zug und an den Niederflurwagen vorgesehen sein. Beim Abholen erfolgen die Tätigkeiten in umgekehrten Reihenfolgen und Richtungen.

Ein weiterer Vorzug dieser Ausführungsform ist der geringere Raumbedarf für die Rampen, für die zwei Fahrbahnbreiten voll ausreichen, was sich besonders dann auswirkt, wenn Rampen zu beiden Seiten des Gleises, und zwar als Einbahnstraßen, vorgesehen sind. Dies hat wiederum den Vorteil, daß die Straßenfahrzeuge wechselweise "Platz und Lücke" aufgestellt sein können. Dies erleichtert das Einparken zum Abgeben und Abholen der Auflieger-Fahrzeuge, so daß es möglich ist, gegebenenfalls auf sämtlichen Niederflurwagen eines Frachtzuges gleichzeitig und schnell einen Platzwechsel vorzunehmen.

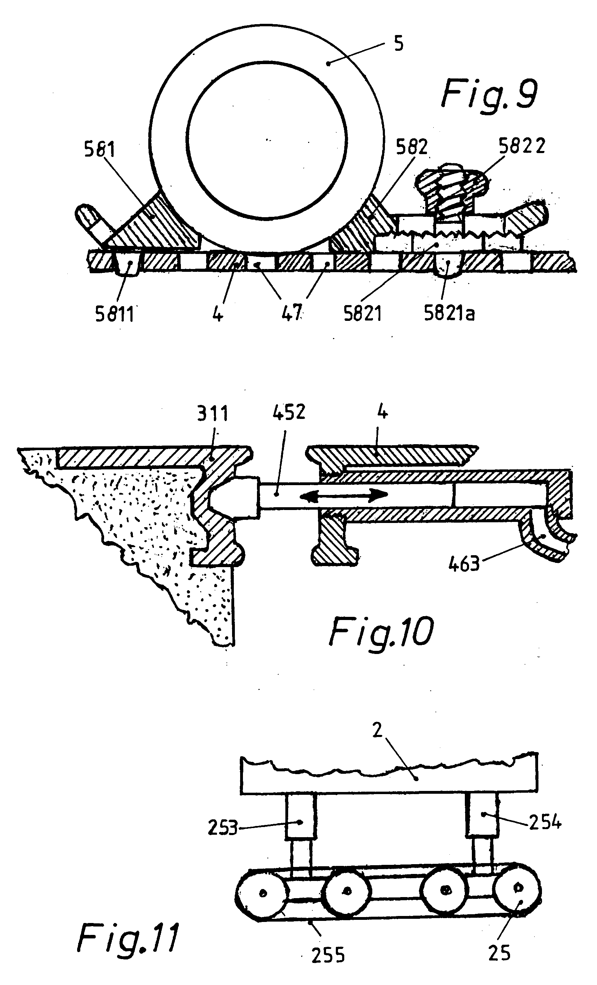

Um der Gefahr vorzubeugen, daß zwischen Rampenkante und Niederflurwagenkante größere Spalte auftreten, können um die Rollen 25 für das Querrollen Flexogurte bzw. Rampengurte gelegt sein, wie Fig.11 mit einem Aufriß von hinten gesehen, veranschaulicht.

Für die Rentabilität der hier vorgeschlagenen Anlagen und Einrichtungen und der Bahn überhaupt, ist die mögliche Belegungsfrequenz und der Ausnutzungsgrad entscheidend. Dazu sind Belegungsbuchungen seitens der kooperierenden Speditionen notwendig, die über ein Netz in bekannter Weise dezentral und zentral vorgenommen und gespeichert werden können, und die dann in Verbindung mit elektronischen Kontrollkarten für Fahrzeugbenutzung und Abrechnung dienen können. Das Aufgeben und Abholen der Auflieger sind dann Sache der Speditionen, die bei Ausbleiben oder Behinderung eines Fahrers einen Kollegen mit seiner Zugmaschine einspringen lassen können.

Ist aber die Aufenthaltszeit zu knapp oder sind mehrere Zugmaschinen ausgeblieben, so kann auch die Möglichkeit vorgesehen sein, daß der Auflieger 2 durch einen Beifahrer betätigt, mit Hilfe der Stromanschlußmöglichkeit am Niederflurwagen 4 und entsprechenden Schaltern am Auflieger auf die Rampe bewegt wird, damit der Zug weiterfahren kann.

Zur weiteren Ausnutzung der Anlagen wird zusätzlich vorgeschlagen, auch den PKW-Huckepack-Transport mit den gleichen oder gleichartigen Rampen und dem gleichen niveaugleichen Straße/Schiene-Überwechselverfahren vorzunehmen, nämlich nicht mehr von hinten aufzufahren und vorne herunter und nicht zweistöckig, sondern einstöckig.

Das bisherige Verfahren hat mehrere erhebliche Nachteile, die das an sich bestehende Marktbedürfnis sehr beeinträchtigen. Zum Bereitfinden und Auffahren auf die Waggons sind mehrere Stunden notwendig. Das gleiche gilt für das Abfahren, wo nur ein Wagen hinter dem anderen vom Zug abrollen kann. Da der Zug nicht an Zwischenstationen Fahrzeuge aufnehmen und umgekehrt an Halteplätzen wieder abgeben kann, ist die Frequenz und der Ausnutzungsgrad der Einrichtung nur auf gewisse Termine und gewisse Einschiffungs- und Ausschiffungsplätze beschränkt, und somit können viele individuelle Kundenwünsche nicht erfüllt werden.

Das Problem der Beschädigung der Fahrzeuge und der Versicherung gegen Transportschäden bedingt zusätzlichen Personalaufwand zur Notierung von Altschäden und Feststellung von Neuschäden. Diese Komplikationen sind alle bedingt durch das umständliche Auffahrt- und Abfahrtverfahren sowie das primitive Blockierverfahren und die doppelstöckige Anordnung. Bei Regenwetter tropft Rostwasser von den Aufbauten und Ketten auf die unteren Fahrzeuge und verdirbt erfahrungsgemäß den Lack. Dem kann man nur durch vorheriges gutes Einwachsen begegnen. Nur in gebückter Haltung ist der Ab- und Anmarsch zum eigenen Auto in der unteren Etage für größere Menschen möglich.

Beim PKW mit seinen kleinen Abmessungen kann das Auffahren von der Rampe auf einen niveaugleichen Niederflurwagen auch quer unter einem wesentlich kleineren Winkel als 90° erfolgen. Erleichterung und große Sicherheit gibt dabei eine doppelseitige Rampenanlage. Auf engem Raum kann auf dem Niederflurwagen dann geparkt werden, wenn die PKWs, wie einige japanische Autos mit zusätzlicher Steuerung der Hinterräder versehen (ADAC Motorwelt, Mai 1987, S.53) wären, und dann aber auch mit einem größeren Einschlagwinkel und auch für Langsamfahrt synchronisiert. Dann ist es möglich, von einer Ausgangsposition auf einer Rampe parallel zur Rampenkante, die PKWs durch ein Zickzack-Fahren vorwärts, rückwärts, auch bei enger Lücke , quer auf dem Niederflurwagen zu bewegen, bis zur Mittelstellung hin. Da die Reifen der PKWs sehr schmal sind, könnte es sein, daß in der Praxis der Toleranzeinhaltung der Spalt zwischen Rampenkante und Kante des Niederflurwagens zu groß ausfällt, obwohl dieses Problem bezüglich der Fahrgäste bei U- und S-Bahnen bisher nicht aufgetaucht ist.

Aber auch für diesen Fall kann eine Lösung vorgeschlagen werden: Die Seitenkanten der Niederflurwagen 4, Fig.8, werden mit aufblasbaren Luftschläuchen 451 versehen. Während der Fahrt und während der Einfahrt zwischen die Rampen sind sie gefaltet, Fig.8 oben. Nach dem Halten des Zuges werden sie über die vorhandene Druckluftleitung 461 aufgeblasen Fig.8 unten, und zwar im selben Zeitrhythmus und mit ähnlichen Stuermitteln wie das Öffene und Schließen der Türen an U- und S-Bahnen, gesteuert von der Zugführung.

Diese Ausführung hat gegenüber Stahlblechen zum Überbrücken den Vorteil, kein besonderes Bedienungspersonal zu benötigen. Bei Eisbildung im Winter erlaubt sie, wie bei der bekannten Einrichtung an Flügelkanten von Flugzeugen, das Absprengen des Eises. Im übrigen wird es zweckmäßig sein, in nördlichen Gebieten die Rampenanlagen zu überdachen, wenn sie sowohl dem Lastverkehr wie dem Personenverkehr dienen.

In gleicher Weise können,durch die Bremsluftleitung betrieben, in Kolben pneumo-hydraulisch über eine Leitung 463 bewegte, an einer Stelle der Seitenflanke der Niederflurwagen 4 gelagerte Riegel 452 in die U-Profil-Rampenkante 311, entsprechend Fig.10, eingreifen und während des Stationsaufenthaltes die Kippsicherung übernehmen.

Das Blockieren der Personenkraftwagen auf den Niederflurwagen kann ebenfalls in Selbstbedienung der Kraftfahrer erfolgen. Als eine der Möglichkeiten wird in Fig.9 eine Ausführung beschrieben.

Die Darstellung ist im Aufriß gezeigt. Die Flur des Niederflurwagens ist mit 4 im Schnitt gezeichnet und entspricht mit ihren Löchern der Darstellung der Fig.5. Mit 5 ist dabei eines der Räder des PKW bezeichnet.

Die Kraftfahrer führen im Wagen mit:
Keilförmige Hemmschuhe (oder diese seien aus Automaten zu entnehmen, die die Bahn stellt). Die Hemmschuhe 581; 582 haben Absätze 5811; 5821, die in die Löcher 47 der Flur hineinpassen. Der eine Hemmschuh 581 kann vorher eingesetzt werden und muß nicht verstellbar sein; der zweiteilige Hemmschuh 582;5821 dagegen ist so verstellbar, daß der Absatz 5821a in ein Loch 47 eingesetzt und danach die Keilanlage des Hemmschuhs 582 beigeschoben werden kann. Die Mutter 5822 sichert diese Stellung.

## Patentansprüche

1. Verfahren zur Kombination des Straßen-Individualtransportes und des schienengebundenen Zugtransportes mit einem schnellen Überwechseln von der einen Transportart zur anderen, bei dem als Transporteinheiten des Individualverkehrs Sattelschlepper Verwendung finden, deren last- und transportguttragender Auflieger (2) auf einem Bahn-Niederflurwagen (4) schienengebunden transportiert wird, während die bei dem Straßentransport lediglich als Träger einer Teillast und als Krafteinheit dienende Zugmaschine (1) nur das Andockmanöver unterstützt und danach für andere Transportaufgaben im Individualverkehr verwendet wird,
dadurch gekennzeichnet, daß der Übergang des Aufliegers (2) von der Straße bzw. Rampe (3) auf den Niederflurwagen (4) durch einen an sich bekannten Querroll-Vorgang vermittels Vorrichtungen (25;253;254;255) bewirkt wird, die mit dem Auflieger (2) als Einheit verbunden sind, und daß die Lieferung der Bewegungsenergie von der Zugmaschine (1) zum Auflieger (2) über ausziehbare Leitungen (261;271) von Strom und/oder Luft erfolgt, die nach dem Andockmanöver abgekuppelt werden.

2. Verfahren nach den Ansprüchen 1, dadurch gekennzeichnet, daß das Andockmanöver bevorzugt in folgenden Schritten erfolgt:
a Das aus der Zugmaschine (1) und dem Auflieger (2) bestehende Sattelschleppergespann wird derart an den Zug herangefahren, daß der Auflieger (2) auf der niveaugleichen Rampe (3) parallel zu einem Niederflurwagen (4) und gleichzeitig auf derselben Einfahrtshöhe zu stehen kommt.
b Die am Auflieger (2) befindliche Abheb- und Querrollverbindung (25;253;254;255) wird für den Abhebvorgang eingeschaltet und danach die Zugmaschine (1) mechanisch entkoppelt ohne die Energieverbindung zu lösen, und der Auflieger (2) wird so weit vorbewegt, bis auch der Königszapfen des Aufliegers von der seitlichen Kupplungsführung freikommt,
c Unter Nutzung der Energiezuführung von der Zugmaschine wird der Auflieger (2) mit seinen eigenen Querrollvorrichtungen auf den Niederflurwagen bewegt,
d Am Auflieger (2) vorhandene Blockiereinrichtungen werden eingeschaltet, und die Energiekupplung zur Zugmaschine (1) wird gelöst, so daß nur der Auflieger(2) auf dem Niederflurwagen verbleibt und vom Zug transportiert wird.

3. Verfahren nach den Ansprüchen 1u.2, dadurch gekennzeichnet, daß die gleichen Einrichtungen an der Bahn (Stationen, Rampen und Niederflurwagen mit Blockiervorrichtungen zwecks besserer Frequenznutzung auch für andere Transportzwecke, wie z.B. Huckepack-Transport von PKW, zur Verfügung gestellt werden.

4. Einrichtung zur Durchführung des Verfahrens nach den Ansprüchen 1 - 3, dadurch gekennzeichnet, daß zur Ausrüstung des Aufliegers (2) eine im wesentlichen aus beweglichen Elementen bestehende Blockiereinrichtung (25;253;254;255) gehört, die für die Fahrzeugsicherung in Selbstbedienung (und Selbstverantwortung) betätigbar ist.

5. Einrichtung nach Anspruch 4, dadurch gekennzeichnet, daß die Blockiereinrichtung automatisch und/oder von Hand bedienbar ist.

6. Einrichtung nach den Ansprüchen 4u.5, dadurch gekennzeichnet, daß an dem von der Bahn zu stellenden Niederflurwagen (4) eine einfache,robuste Vorrichtung vorgesehen ist, die mit der Blockiereinrichtung zusammenwirkt und dieser Halt gibt.

7. Einrichtung nach Anspruch 6, dadurch gekennzeichnet, daß die Vorrichtung aus einem mit rhombischen Löchern (47) versehenem Rost besteht.

8. Einrichtung zur Durchführung des Verfahrens nach den Ansprüchen 1 - 3, dadurch gekennzeichnet, daß an der Rampe (3) und/oder an dem Niederflurwagen (4) technische Mittel vorgesehen sind, die ein Verkippen des Niederflurwagens (4) bei dem Last-Überwechsel von der Rampe zum Niederflurwagen einerseits und vom Niederflurwagen zur Rampe andererseits verhindern.

9. Einrichtung nach Anspruch 8, dadurch gekennzeichnet, daß diese technischen Mittel zur Kippsicherung aus an der oder den Rampenkanten oder an zusätzlichen Pfosten angebrachte Profilleisten (31;32), vorzugsweise mit U-Profil, bestehen, die im Zusammenwirken mit festen oder einschaltbaren Vorsprüngen am Niederflurwagen (4) dessen Verkippen beim Lastüberwechsel verhindern.

10. Einrichtung nach Anspruch 9, dadurch gekennzeichnet, daß die einschaltbaren Vorsprünge am Niederflurwagen pneumohydraulisch betätigbare Riegel (452) sind, die während des Aufenhaltes des Niederflurwagens an der Rampe (3) von der Zugzentrale aus geschaltet (ausgefahren) werden.

11. Einrichtung zur Durchführung des Verfahrens nach den Ansprüchen 1u.2, dadurch gekennzeichnet, daß die Energieversorgung des Aufliegers (2) mindestens nach der Entkopplung von der Zugmaschine (1) vom Zug aus erfolgt und mit dieser Energie z.B. Kühlwagen und das am Auflieger verbliebene Rollwerk betreibbar sind, so daß der Auflieger auch dann rangierbar ist, wenn momentan keine Zugmaschine zur Verfügung steht.

## Claims

1. Method for the combining of individual road transport and rail transport, with a rapid changeover from the one mode of transport to the other, in which articulated lorries are used as transport units of the individual traffic, the load and freight-carrying semitrailer (2) of which is transported railbound on a low-deck railway wagon (4), while the tractor unit (1), which serves during road transport merely as prime mover and as carrier of a part load, assists only the docking manoeuvre and thereafter is used for other transport tasks in individual traffic, characterised thereby that the transfer of the semitrailer (2) from the road or ramp (3) to the low-deck wagon (4) is effected by a transverse rolling process, which is known in itself, with the help of devices (25; 253; 254; 255) which are connected with the semitrailer (2) as a unit, and that the supply of the motive energy from tractor unit (1) to the semitrailer (2) takes place by way of withdrawable current and/or air lines (261; 271) which are uncoupled after the docking manoeuvre.

2. Method according to claim 1, characterised thereby that the docking manoeuvre preferably takes place in the following steps:
a the articulated lorry rig consisting of the tractor unit (1) and the semitrailer (2) is driven up to the train in such a manner that the semitrailer (2) comes to rest on the same-level ramp (3) parallel to a low-deck railway wagon (4) and simultaneously at the same run-in height,
b the lifting and transverse rolling connection (25; 253; 254; 255) disposed at the semitrailer (2) is switched on for the lifting process and subsequently the tractor unit (1) is mechanically uncoupled without undoing of the energy connection, and the semitrailer (2) is advanced until the kingpin of the semitrailer comes free from the lateral coupling guide,
c the semitrailer (2) with its own transverse rolling devices is moved on the low-deck wagon with use of the energy feed of the tractor unit, and
d blocking devices present at the semitrailer (2) are switched on, and the energy coupling to the tractor unit (1) is undone, so that only the semitrailer (2) remains on the low-deck wagon and is transported by the train.

3. Method according to claims 1 and 2, characterised thereby that the same devices at the railway (platforms, ramps and low-deck wagon with blocking devices) are, for the purpose of improved frequency of use, made available also for other transport purposes, such as, for example picka-back transport of passenger cars.

4. Equipment for carrying out the method according to claims 1 to 3, characterised thereby that a blocking device (25; 253; 254; 255), which substantially consists of movable elements and is actuable in self-operation (and self-response) for vehicle securing, belongs to the fittings of the semitrailer (2).

5. Equipment according to claim 4, characterised thereby that the blocking equipment is actuably automatically and/or manually.

6. Equipment according to claims 4 and 5, characterised thereby that provided at the low-deck wagon (4) to be furnished by the railway is a simple, robust device which co-operates with the blocking equipment and gives support to this.

7. Equipment according to claim 6, characterised thereby that the device consists of a grid provided with rhomboidal holes (47).

8. Equipment for carrying out the method according to claims 1 to 3, characterised thereby that provided at the ramp (3) and/or at the low-deck wagon (4) are technical means which prevent a tipping of the low-deck wagon (4) during the load changeover from the ramp to the low-deck wagon on the one hand and from the low-deck wagon to the ramp on the other hand.

9. Equipment according to claim 8, characterised thereby that the technical means for protection against tipping consist of profile strips (31; 32), preferably with a U-profile, which are mounted at the ramp edge or edges or at additional posts and which in co-operation with fixed or switchable-in projections at the low-deck wagon (4) prevent tipping thereof during load changeover.

10. Equipment according to claim 9, characterised thereby that the switchable-in projections at the low-deck wagon are pneumatically-hydraulically actuable bars (452) which are switched out (driven out) from the train control cabin during the halt of the low-deck wagon at the ramp (3).

11. Equipment for carrying out the method according to claims 1 and 2, characterised thereby that the energy supply of the semitrailer (2) takes place from the train at least after the uncoupling of the tractor unit and, for example, refrigeration cars and the rolling mechanism remaining at the semitrailer are operable by this energy, so that the semitrailer can be shunted even if a tractor unit is temporarily unavailable.

## Revendications

1. Procédé pour la combinaison du transport individuel par route et du transport par train sur rail avec un passage rapide d'un mode de transport à l'autre dans lequel on utilise comme unité de transport pour le trafic individuel des véhicules à semi-remorque dont la semi-remorque (2) portant la charge et le produit à transporter est amenée sur un wagon surbaissé (4) solidaire des rails de chemin-de-fer tandis que le tracteur (1) qui sert durant le transport routier de porteur pour une partie de la charge et d'unité motrice de traction et ne fait que contribuer à la manoeuvre d'accostage est utilisé ensuite à d'autres opérations de transport dans le trafic individuel, caractérisé en ce que le passage de la semi remorque (2) de la route, c'est-à-dire de la rampe (3), sur le wagon surbaissé (4) est effectué au moyen d'un processus bien connu de rouleaux transversaux (25, 253, 254, 255) qui sont solidaires de la semi-remorque (2) pour former un ensemble et en ce que la fourniture de l'énergie de déplacement est réalisée à partir du tracteur (1) vers la semi-remorque (2) aux moyens de canalisations extensibles (261, 271) pour le courant électrique et/ou pour l'air et qui sont désacouplés après la manoeuvre d'accostage.

2. Procédé selon la revendication 1, caractérisé en ce que la manoeuvre d'accostage est effectuée de préférence selon les étapes suivantes :
- a) On amène l'ensemble du véhicule semi-rèmorque comportant le tracteur (1) et la semi-remorque (2) vers le train de telle façon que cette semi-remorque (2) se trouve positionnée sur la rampe (3) dont le niveau est celui d'un wagon surbaissé (4), parallèlement à ce dernier et simultanément à la même hauteur d'accès.
- b) On enclenche la liaison de déchargement à rouleaux transversaux (25, 253, 254, 255) située sur la semi-remorque (2) pour le processus de déchargement et ensuite on désacouple le tracteur (1) mécaniquement sans pour autant couper la liaison en énergie, la semi-remorque (2) étant soumise à un déplacement jusqu'à ce que le pivot principal de la semi-remorque soit dégagé du guidage latéral de l'attelage.
- c) on utilise l'alimentation en énergie par le tracteur, et l'on amène la semi-remorque (2) sur le wagon surbaissé au moyen de ses propres dispositifs de déplacement transversal.
- d) on enclenche des dispositifs de blocage disponibles sur la semi-remorque (2) et l'on détache l'accouplement en énergie avec le tracteur (1) de sorte que seul la semi-remorque (2) demeure sur le wagon surbaissé qui est transporté par le train.

3. Procédé selon les revendications 1 et 2, caractérisé en ce que les mêmes installations sur les chemins de fer (gare, rampes et wagons surbaissés avec installation de blocage) sont disponibles également pour d'autres transports comme par exemple des transports combinés rail-route pour des voitures particulières en vue d'une meilleure fréquence d'utilisation.

4. Installation pour la réalisation du procédé selon les revendications 1 à 3, caractérisée en ce qu'une installation de blocage constituée essentiellement par des éléments mobiles (25, 253, 254, 255) fait partie de l'équipement de la semi-remorque (2), installation qui est manoeuvrable en self-service pour la sécurité du véhicule (et pour la responsabilité personnelle).

5. Installation selon la revendication 4, caractérisée en ce que l'installation de blocage peut être commandée automatiquement et/ou manuellement.

6. Installation selon les revendications 4 et 5, caractérisée en ce que le wagon surbaissé (4) à mettre à la disposition pour les cheminsde-fer est pourvu d'un dispositif robuste qui coopère avec l'installation de blocage et renforce celle-ci.

7. Installation selon la revendication 6, caractérisée en ce que ledit dispositif est constituée par une grille pourvue de trous rhombiques (47).

8. Installation pour la réalisation du procédé selon les revendications 1 à 3, caractérisée en ce que des moyens techniques sont prévus sur la rampe (3) et/ou sur le wagon surbaissé (4) qui empêchent un basculement du wagon surbaissé (4) lors du transfert de la charge de la rampe vers le wagon surbaissé d'une part et du wagon surbaissé vers la rampe d'autre part.

9. Installation selon la revendication 8, caractérisée en ce que lesdits moyens techniques pour empêcher le basculement sont constitués par des profilés (31, 32) de préférence en forme de U rapportés sur le ou les bords des rampes ou sur des pieux auxiliaires qui coopèrent avec des saillies fixes ou escamotables prévues sur le wagon surbaissé (4) pour empêcher le basculement de ce dernier durant le transfert de la charge.

10. Installation selon la revendication 9, caractérisée en ce que les saillies escamotables sur le wagon surbaissé sont des verrous (452) actionnables par un moyen pneumo-hydraulique qui sont enclenchés (sortie) durant l'arrêt du wagon surbaissé le long de la rampe (3) à partir de la centrale du train.

11. Installation pour la réalisation du procédé selon les revendications 1 et 2, caractérisée en ce que l'alimentation en énergie de la semi-remorque (2) est réalisée à partir du train au moins après le désacouplement du tracteur (1) et en ce qu'avec cette alimentation en énergie il est possible de faire fonctionner par exemple un wagon réfrigéré ainsi que le mécanisme de déplacement sur roues qui est resté sur la semi-remorque de sorte que ladite semi-remorque peut encore être garée lorsque aucun tracteur ne se trouve momentanément disponible.
